# EUROPEAN PATENT APPLICATION

(11) **EP 1 016 972 A1**
(43) Date of publication of application: **05.07.2000**
(21) Application number: 98911193.5
(22) Date of filing: 03.04.1998
(51) Int. Cl.: G06F 13/00, H04L 12/58, G06F 3/14

(54) **ELECTRONIC MAIL CLIENT AND SERVER WHICH SEND AND RECEIVE ELECTRONIC MAIL WITH NO SPECIFIED DESTINATION AND ORIGINATOR, AND ELECTRONIC MAIL SYSTEM BUILT UP BY CONNECTING THESE DEVICES**

(30) Priority: 05.06.1997 JP 16330597; 12.06.1997 JP 55411997
(71) Applicant: Recruit Co., Ltd., Tokyo 104-0061 (JP)
(72) Inventor: NAGAI, Yoshihito, Saitama 330-0845 (JP)
(74) Representative: Finnie, Peter John
(86) International application number: JP9801542
(87) International publication number: WO9855931

(57) **Abstract**

An electronic mail system providing a unique form of communication distinguished from those of conventional electronic media by distributing anonymous mails is disclosed. The electronic mail system comprises a mail server **S** and a plurality of mail clients **C** connected thereto, each arranged in the Internet **INET.** The client **C** converts the text and/or graphic data input by a user into image data in the BMP format to compose an anonymous mail containing the image data. The anonymous mail is transferred to and stored in a mailbox **30** in the server **S.** The client **C** logged in to the server **S** receives a mail selected at random from among those stored in the mailbox **30.** Receipt of the mail is indicated to the user by display of a bottle arrived at a seashore on a monitor. Determination whether or not arrival of the mail should be indicated is made repeatedly at predetermined time intervals.

## Description

### Technical Field

The present invention relates to an electronic mail system of client/server architecture, and particularly to an electronic mail system including a client for transmitting anonymous messages and a server for storing electronic mails such as the anonymous messages and distributing them to other clients on a network.

### Background Art

The Internet, a global computer network, has been common to various organizations such as governmental bodies and corporations, and individuals as data transmission paths between remote computers. Typically, electronic communication through networks including the Internet provides the following four types of services such as WWW, chat, forum and electronic mail or mailing list services.

WWW provides that any person may put his/her creative works such as papers, illustrations, novels and diaries, on the Internet so as to show the works to indefinite multiple visitors to the sites where the works are stored. In a word, WWW provides "one-to-indefinite multiple persons communication with a time delay".

Chat provides electronic conversation based on exchange of text data input by participants in either a closed or an open group in real time. This may be categorized in a "one-to-definite or indefinite multiple persons real time communication".

Activities in a forum are similar to conversation between multiple participants of a specific preference or interest while keeping a log in a text data in the group. This may be defined as a "one-to-definite multiple persons communication with a time delay".

Electronic mail service including a mailing list provides communication of electronic data files containing text data, graphic data, audio data and so on, which are directed to a specific person or definite multiple persons. In other words, the electronic mail service is a "one-to-one or one-to-definite multiple persons communication with a time delay".

The aforementioned conventional electronic communications on a network is typically characterized as including voluntarily active steps for solving problems. For example, electronic communications such as a forum and an electronic mail seem to have such primary objects as requests for advice in business or hobbies or notifications regarding jobs or personal matters. In contrast with the above communications, it is possible to put purposeless comments including miscellaneous or trivial topics and/or self-opinionated words in the WWW or chat. However, it is uncertain whether the participants would pay attention to the words one typed in because there are other participants as in real conversation. As for the WWW, it may be difficult to create a Web site in which his/her opinions to be written since it requires significant efforts including learning of HTML languages and authoring softwares. Moreover, even if the one opened a Web site after overcoming the problem, there is no guarantee that someone stops by the site to read his/her words. Even if one gives completely anonymous words in the network, it is almost impossible to conceal his/her ID, a mail address, or a URL.

Furthermore, when one wishes to send a message via an electronic mail, for example, he/she is required to start a mailer software installed in a personal computer, to compose a mail, and to send the mail to the network. It is preferable for everyone to readily send a message, however, sending an electronic mail actually contains very awkward steps to follow as mentioned above. It is a problem that such an environment is not prepared that one is able to send a message like a monologue easily and instantly.

### Disclosure of the Invention

The present invention is made in consideration of the above problems and it is one object of the present invention to provide an electronic mail system including an electronic mail client apparatus for transmitting an anonymous message to a network and an electronic mail server apparatus for storing electronic mail files containing such messages and transferring the mail files to any of the other clients in the network though it is not predictable when the mail file is received.

In order to accomplish the above and other objects, an electronic mail client apparatus according to one aspect of the present invention comprises
means for converting text data and/or graphic data input by a user into an image data of a predetermined data format,
means for composing an electronic mail file containing the converted image data, the mail file being automatically provided with a mail address of a predetermined mailbox on a communication network as a destination, the mail file bearing no information for identifying a sender unless the sender information is included in the converted image data by a sender intentionally,
means for transmitting the electronic mail file to the mailbox on the communication network if the client apparatus is connected with the communication network when the user requests transmission of the mail file, together with such mail files being saved in the client apparatus that have been previously composed but not transmitted yet,
means for receiving to store one or more electronic mail files transferred from the predetermined mailbox and indicating receipt of the transferred electronic mail files based on decision according to a predetermined rule as to whether the receipt should be indicated or not, and
means for displaying the image data contained in the received electronic mails to the user of the client apparatus that receives the electronic mails.

The received electronic mail files may be transferred to the other client apparatuses through the communication network when the received mail files are neither saved nor deleted.

Determination may be made at such time intervals for indicating the receipt of the mail files that the time interval is calculated according to a predetermined procedure, and a probability of occurrence for each of events as to whether indicating or not the receipt of the mail file is set at a predetermined value.

Furthermore, appearance of the displayed mail file is varied dependent on predetermined information provided to the received mail files according to a communication protocol applied to transmission of the mail files. For example, the transmission time data contained in the received electronic mail file may be compared with the present time to display the image data in the electronic mail file in the manner such that the image data is displayed on a sheet presented with visual expression of time passage along with the time lapsed since the transmission time until the present time.

According to one aspect of the present invention, an electronic mail server apparatus comprises
means for storing electronic mail files sequentially in a predetermined mailbox, which are transferred from users,
means for transmitting the electronic mail files to a user, which are selected from among the mail files stored in the mailbox when the user logs in to, and deleting the mail files already transmitted to the user remaining in the mailbox, and
means for processing a plurality of transmitting and receiving procedures in parallel with a plurality of users, so that the plurality of users are allowed to log in to.

Message files from a system may be stored in the mailbox and transmitted with the electronic mail files to the user who logs in to. In such a case, it is preferable that data containing predetermined conditions under which the message is to be displayed is attached to each message file. One electronic mail file randomly selected from among the stored mail files in the mailbox, may be transmitted to the user who logs in to, or one or more electronic mail files may be selected from among the mail files stored in the mailbox and transmitted to a user according to a predetermined rule corresponding to the number of the mail files stored in the mailbox.

According to an electronic mail system of the present invention, the above mentioned electronic mail client and server apparatuses are connected through a communication network. An address of the mailbox of the electronic mail server apparatus is designated as a destination address of electronic mail files from the electronic mail client apparatuses.

According to another aspect of the present invention, an electronic mail client apparatus comprises
means for representing received and transferred electronic mail files as an object containing a message drifting across a virtual space,
means for composing an electronic mail file containing a message data, which is automatically provided with an address of a predetermined mailbox on the communication network to which the client apparatus is connected, the message data being input on a sheet displayed on a monitor of the client apparatus with a drawing tool presented on the monitor,
means for transmitting the electronic mail file to the predetermined mailbox on the communication network in response to the user's request, the transmission procedure being represented visually as an image of forwarding the object with a message in the virtual space from one place therein,
means for receiving the electronic mail file transferred from the mailbox and displaying the receipt of the mail file, the receipt of the mail file being represented as an image that the object with a message has reached another place in the virtual space, and
means for displaying the message data in the received electronic mail file to the user of the client apparatus which has received the mail file.

The message data input by the user is automatically converted into an image data of a predetermined data format, and the message data includes text data and/or graphic data.

The electronic mail file may not include an information for identifying the sender.

The composed mail file may be stored in a predetermined area in the client apparatus in case that the client apparatus is not connected with the communication network when transmission request is made by the user, and the stored mail file may be transmitted with a new composed electronic mail file to the mailbox in case that the client apparatus is connected with the communication network when transmission of the new composed mail file is requested by the user.

Receipt of the transferred or received electronic mail files from the mailbox may be displayed based on results from a predetermined decision as to whether the receipt of the mail file should be indicated or not. In particular, the determination is made at such time intervals for indicating the receipt of the mail files, that the time interval is calculated according to a predetermined procedure and a probability of occurrence for each of events as to whether indicating or not the receipt of the mail file may be set at a predetermined value.

Furthermore, the displayed visual image of the virtual space may be changed according to the time when the client apparatus is started or the time lapsed since the client apparatus is started.

The electronic mail files, which have been received but neither saved nor deleted in the client apparatus, are transferred to another client apparatus through the communication network.

Appearance of the displayed mail file may be varied dependent on predetermined information provided to the received mail files according to a communication protocol applied to transmission of the mail files. For example, the transmission time data contained in the received electronic mail file may be compared with the present time to display the image data in the electronic mail file in the manner such that the image data is displayed on a sheet presented with visual expression of time passage along with the time lapsed since the transmission time until the present time.

### Brief Description of the Drawings

**Fig. 1** is a schematic diagram of a bottle mail system according to one embodiment of the present invention;
**Fig. 2** is a flowchart of a mail composition and transmission routine of a client apparatus **C** in a bottle mail system according to one embodiment of the present invention;
**Fig. 3** is a flow chart showing processing of received mails in a client apparatus **C** in a bottle mail system according to one embodiment of the present invention;
**Fig. 4** is a flow chart showing a mail arrival indicating processes in a client apparatus **C** in a bottle mail system according to one embodiment of the present invention;
**Fig. 5** shows a flow chart of operation of a server apparatus **S** in a bottle mail system according to one embodiment of the present invention;
**Fig. 6** is a flow chart (1) showing operation and display of a client apparatus **C** in a bottle mail system according to one embodiment of the present invention;
**Fig. 7** is a flow chart (2) showing operation and display of a client apparatus **C** in a bottle mail system according to one embodiment of the present invention;
**Fig. 8** is a flow chart (3) showing operation and display of a client apparatus **C** in a bottle mail system according to one embodiment of the present invention;
**Fig. 9** is a flow chart (4) showing operation and display of a client apparatus **C** in a bottle mail system according to one embodiment of the present invention;
**Fig. 10** is a screen dump displaying a "scene in which a treasure box is left on a seashore while waves are rolling thereto", which is an idle screen of a client apparatus **C** in a bottle mail system according to one embodiment of the present invention;
**Fig. 11** shows a screen dump displaying a "picture in which the album and the sketchbook are popping out of the treasure box" in a client apparatus **C** in a bottle mail system according to one embodiment of the present invention;
**Fig. 12** shows a screen dump of a "list of the saved mails" in a client apparatus **C** in a bottle mail system according to one embodiment of the present invention;
**Fig. 13** is a screen dump showing a "drawing sheet as a blank page of the sketchbook and drawing tools" in a client apparatus **C** in a bottle mail system according to one embodiment of the present invention;
**Fig. 14** shows a screen dump of a "scene in which the bottle containing a mail is drifting away from a seashore" in a client apparatus **C** in a bottle mail system according to one embodiment of the present invention;
**Fig. 15** is a screen dump showing an "image of a bottle containing a mail lying on the seashore" in a client apparatus **C** in a bottle mail system according to one embodiment of the present invention; and
**Fig. 16** shows a screen dump of the "contents of the mail" in a client apparatus **C** in a bottle mail system according to one embodiment of the present invention.

### Best Mode for Carrying Out the Invention

One embodiment of the present invention will be described hereinafter by referring to the accompanying drawings. One of the significant features of the electronic mail system according to one embodiment of the present invention is that the whole system is metaphorized as "a bottle carrying a message therein, drifting around an ocean". Namely, the bottle carrying a message therein and the ocean correspond to an electronic mail communicated through a network and the network including a mail server for storing the mails, respectively. Operation interface and the functions of the system are designed based on the above-mentioned metaphor. Each of the client apparatuses in the electronic mail system is regarded as a seashore toward which the waves are rolling from the ocean. Therefore, in a virtual aspect of the system, the story develops as follows:
*Someone or a client apparatus puts his/her message in a bottle or an electronic mail with the sender basically concealed and throws it in the ocean. The bottle drifts around oceans or a network and/or electronic mail server and someday finally gets to* *another place or other client apparatus.*

It would be apparent that the present system is very different from the conventional electronic mail system which basically handles various information carrying a particular message to an individual or a definite group. However, it should be noted that another metaphor such as a "balloon carrying a mail flying across the sky" may be employed instead of a bottle in the ocean. In the meantime, alternative objects to the bottle, for example, a shell or a balloon drifting around oceans or flying across the sky, may be employed.

Hereinafter, the electronic mail system according to the present invention will be referred to as a "bottle mail system". Also, the electronic mail data file will be hereinafter simply referred to as a "mail".

### (A) Outline of the System

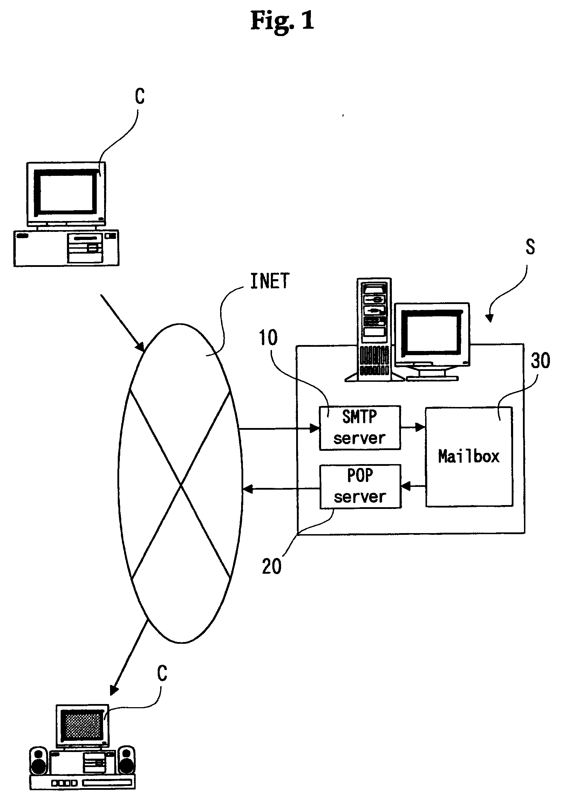

**Fig. 1** is a schematic diagram of a bottle mail system according to one embodiment of the present invention. The bottle mail system comprises a mail server **S** and a plurality of mail clients **C**, both connectable to the Internet **INET.**

The mail server **S** has an SMTP server **10** for receiving a mail from the client **C** and a POP server **20** for transferring a mail to the client **C**. The SMTP server **10** stores the received mails in a mailbox **30**. Various messages to be transmitted to the clients **C** may be stored in the mailbox **30** as well as the mails received from the client **C.** The messages may include various notifications from the system to the subscribers, i.e., the clients **C**, advertisements or public relations by private and public corporations.

The client **C** is typically a personal computer having hardware such as a modem and a terminal adapter and software such as TCP/IP connection software, for being connectable with the Internet **INET.** A client software of the bottle mail system is installed in the personal computer. When one intends to subscribe the bottle mail system, it is sufficient to install the bottle mail client software in the computer available, which can be connected to the Internet **INET,** thereby the computer operates as the client **C** accessible to the server **S**. The client software may be prepared as a shareware with such restriction that the function of the software is partly disabled till entering a password issued by the system when registration is made.

### (B) Function of the Client C

The function of the client **C** will be described hereinafter by referring to the accompanying flow charts.

### (a) Composition and Transmission of Mails

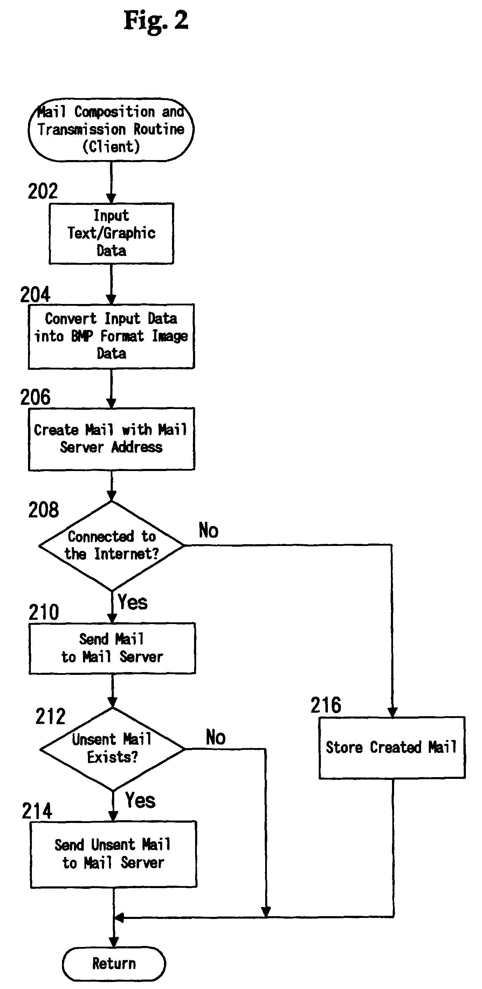

**Fig. 2** shows a flow chart of composition and transmission routine of the bottle mail by the client **C**. This time, it is assumed that the bottle mail system client software is started in the client **C**.

A user who wants to write a mail may type in any character strings, i.e., text data or any pictures, i.e., graphic data as he/she likes in a mail composition screen (S202). This operation is the same as that of conventional paint software. The input data are converted into image data of BMP format (S204). The BMP format is one of standard data formats for graphic files in Windows. This data conversion into the BMP format is made so as to avoid possible errors in displaying text data due to differences in a platform, a language and a font set between those employed in respective clients **C**. In the present embodiment, the BMP format has been employed since the BMP format seems to be the most prevalent format at this time. However, in view of orientation of the present invention to construct a cross-platform system, other graphic file formats may be applied to, such as a PICT format which is standard in MacOS, and JPEG and GIF compressed file formats.

Subsequently, a new mail is created based on the above converted image data (S206). An address of the mailbox **30** of the mail server **S** is affixed to the created mail as a destination. The mail does not include any other specific address and information regarding a sender than the mailbox address of the mail server **S**. That is, the above-created mail is an anonymous mail bearing no specific recipient address. It should be noted that the sender of the mail may include his/her mail address or name in the mail if he/she wishes to identify him/herself.

It is also possible to attach a sound file to the mail. The sound file may be created in WAV format or the like through audio input devices such as a microphone and a soundboard installed in the client **C**. Furthermore, other sound files available on commercial computer networks, or the Internet and movie files such as a QuickTime movie can be attached to the mail.

If the client **C** is connected with the Internet **INET** (S208 Yes), the created mail is sent to the mail server **S** immediately (S210). Subsequently, if the unsent mail which was created previously but not sent to the mail server **S** exists in the client **C** (S212 Yes), the unsent mail is forwarded to the server **S** (S214). If the client **C** is not connected to the Internet **INET** (S208 No), the above created mail is stored in a predetermined memory portion in the client **C** to wait the next opportunity for transmission (S216).

### (b) Process of Received Mail

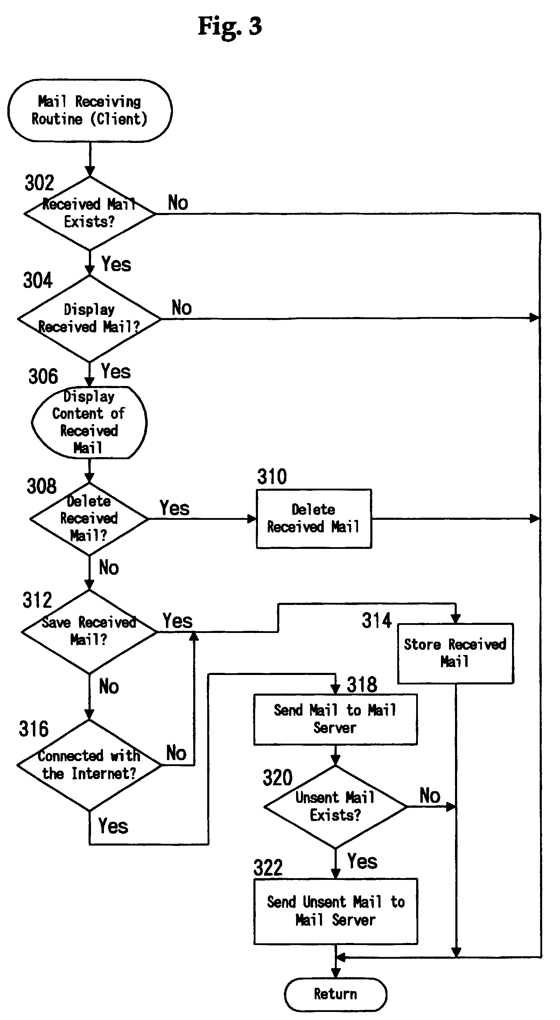

**Fig. 3** shows a flowchart of receiving a mail and subsequent processes in the client **C**.

If there is a received mail and a user wishes to view the contents of the mail (S302, S304 Yes), the contents of the mail, i.e., the BMP format image data contained in the mail is displayed on a monitor of the client **C** (S306). The monitor is typically a CRT display in the present embodiment. However, other display devices may be employed as the monitor. The viewed mail can be then deleted, saved in the client **C**, or forwarded to other clients **C** by returning the mail via the network to the server **S**. If the mail is to be deleted or stored (S308 or S312 Yes), the mail is deleted or stored in a predetermined memory area in the client **C**, respectively (S310, S314). If the viewed mail is neither deleted nor stored (S308, S312 No), the mail is forwarded to other clients **C**. Therefore, if the client **C** is connected with the Internet **INET** in this instance (S316 Yes), the mail is transferred to the mail server **S** (S318). If the unsent mail remains in the client **C** (S320 Yes), the unsent mail is forwarded to the server **S** with the above viewed mail (S322). If the client **C** is not connected with the Internet **INET** (S316 No), the viewed mail is stored in the predetermined memory area in the client **C** (S314) as an unsent mail.

### (c) Indication of Mail Arrival

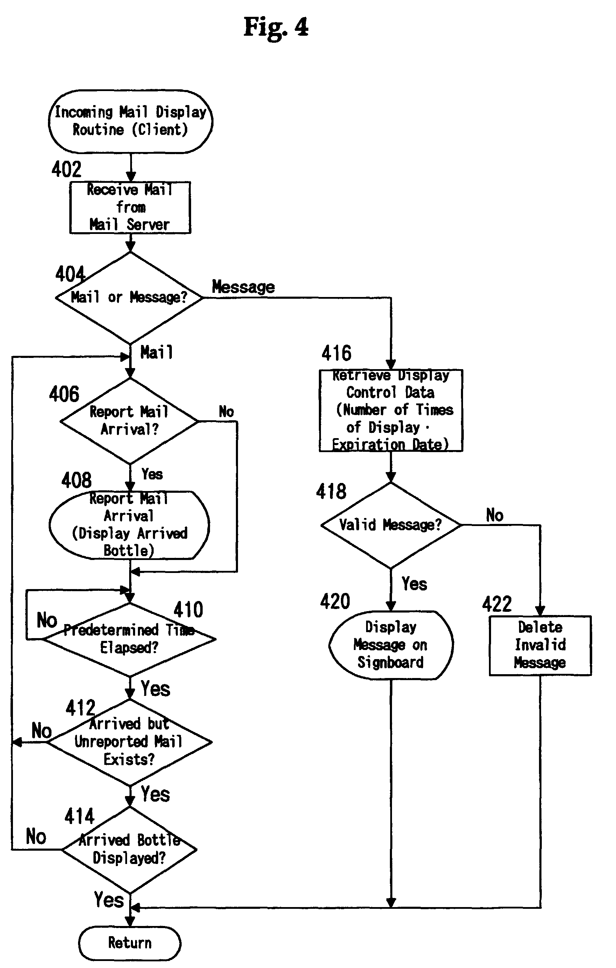

**Fig. 4** is a flowchart showing indication processes of mail arrival at the client **C**.

When the client **C** receives data from the mail server **S**, the client **C** determines if the received data is a mail from other clients **C** or a message originated by the system. If the received data is determined as a mail (S404 "Mail"), the client **C** decides whether or not the client **C** indicates arrival of the mail on the monitor instead of displaying arrival of the mail on the monitor immediately after the receipt thereof (S406). As described in detail below, arrival of a mail is indicated as "a bottle which has reached to a seashore" on the monitor of the client **C.** In this determination step, one third of probability is assigned to each event of indicating and no indicating of the arrival of the mail. If it is determined that the arrival is indicated (S406 Yes), "a bottle which has reached to a seashore" is displayed on the monitor (S408). The probability assigned to each event may be varied based on various indexes of conditions of system operation. Alternatively, probability to be applied to in the next determination step may be recalculated according to a predetermined algorithm for every execution of the determination step.

If it is determined that arrival of a mail is not indicated in the step S406, a timer is activated for providing a time interval between the determination steps for indicating arrival of mails (S410). The initial time interval is set fifteen (15) minutes in the present embodiment. However, the time interval may be varied, for example, in such a manner that the client software is designed to allow users to adapt the time interval according to their preferences. A plurality of bottles may be shown on the monitor so as to indicate arrival of multiple mails, though one bottle is shown at a time in the present embodiment.

Then, it is determined whether there is such a mail which has been already received by the client **C** but arrival of the mail has not been indicated. If the above mail exists and arrival of mails is not indicated on the monitor, that is, no bottle is shown on the screen (S414 No), the steps following the determination step of S406 are repeatedly executed. In summary, since there provided a flow of determination if arrival of mails is indicated or not by determining if the mail exists which has been already received but not indicated yet, users can conceive that mails arrive online in real time even when the client **C** is actually off-line.

On the other hand, it it is determined that the data received in S404 is a message from the system (S404 "Message"), a display control information in the message is retrieved (S416). The display control information carries conditions for displaying the message. In this embodiment, the conditions include "the number of display" and "expiration date" of the message. In control by the number of display, for example, a preset value of the number of display may decrement for each display of the message. As for the expiration date, a date value of the expiration date is exemplarily first compared with that of a system clock in the client **C**. If the date value of the expiration date exceeds that of the system clock, the message bearing the expiration date is not displayed on the monitor. Moreover, if a "time period when display of the message is permitted" is additionally carried by the message, the corresponding message may not be displayed on the monitor except for the above time period by determining if the present time according to the system clock falls into the time period carried in the message.

If the message is determined valid (S418 "Valid"), the message is shown on the monitor of the client **C** (S420). On the other hand, if the message is determined invalid (S418 "Invalid"), the corresponding message is deleted (S422). The messages are shown as a "signboard placed at a seashore on which a message is written" in the present embodiment. However, it is possible to employ other objects such as a monolith, a smoke belched from a ship, and a contrail.

### (C) Function of Mail Server S

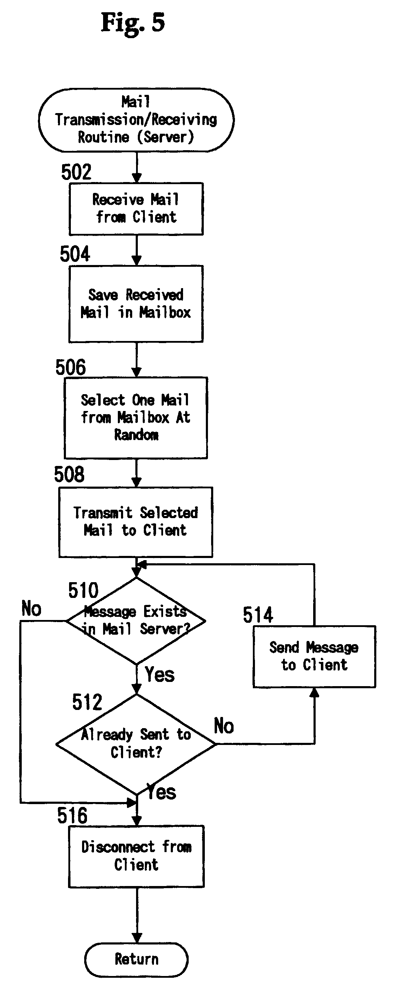

Function of the mail server **S** communicating with the above-mentioned clients **C** will be described referring to **Fig. 5. Fig. 5** is a flowchart showing the function of the server **S**.

When accessed by the client **C**, the server **S** receives a mail transmitted from the client **C**, and stores the received mail in the mailbox (S502, S504). The mailbox of the server **S** is a common region for storing the received mails from the clients **C** in the network and open to every client **C.** The mails received from the respective clients **C** are stored sequentially in the order of arrival time of the mails.

Subsequently, a mail is picked up from among those stored in the mailbox at random (S506), then transmitted to the client **C** logging in to the server **S** (S508). It is also possible to pick up the mails, the number of which is determined based on the number of the mails stored in the mailbox. For example, one or three mails may be picked up when three or ten mails remain in the mailbox, respectively. The maximum number of the mails, which can be picked up at a time may be set, so as to avoid transmission of extraordinary amount of the mails transferred to the clients **C** at a time.

In the next step, the server **S** examines if there is any message other than mails in the mailbox. If there is such a message (S510 Yes), the server **S** then determines whether the message has been already transmitted to the client **C**. If the message is not sent to the client **C** (S512 No), the message is transferred to the client **C** logging in to the server **S**. When all the messages are sent to the client **C** after executing the above steps repeatedly, the server **S** is disconnected from the client **C** (S516).

### (D) Operation and Screen Display of Client C

Processing steps in the client apparatus **C** and the server apparatus **S** have been discussed hereinabove by referring to the flowcharts. Description of operation steps and the corresponding screen display of the client **C** will be given below, referring to the drawing of the flowcharts and screen dumps, that is, description of user interface of the client **C**.

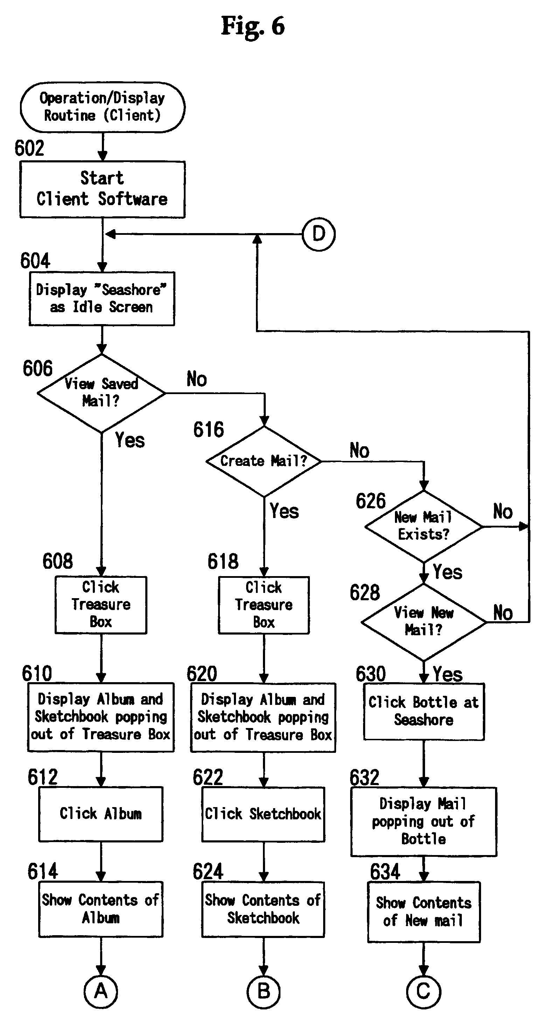

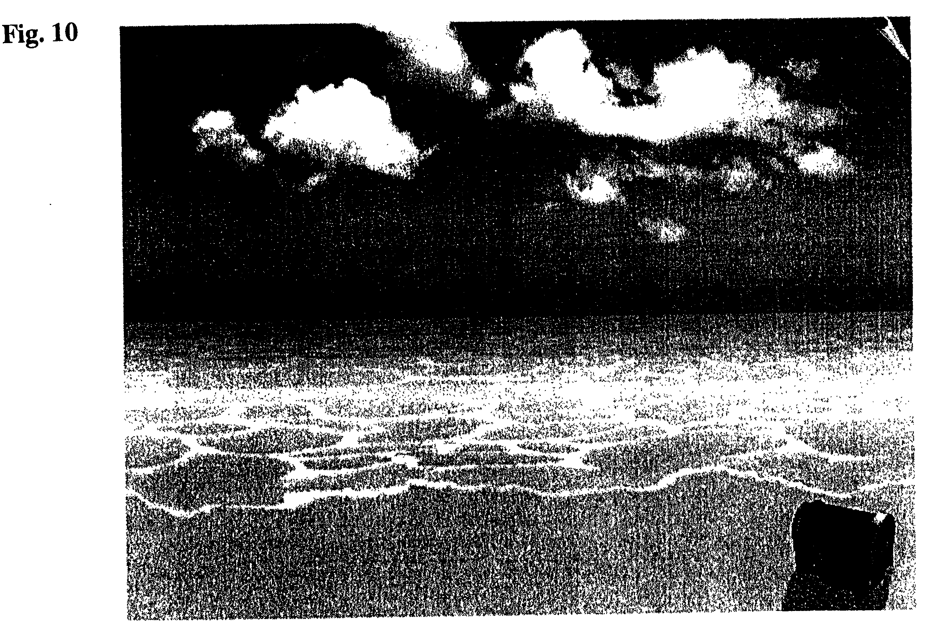

**Figs. 6-9** show flowcharts of operation and screen display of the client **C**. In **Figs. 10-16** are shown main screens displayed on the monitor of the client **C**.

When a user starts the bottle mail client software installed in the client **C** (S602), a title including credits is displayed for a certain time period, and an idle screen is displayed on the monitor (S604). As shown in **Fig. 10,** the idle screen shows a "scene in which a treasure box is left on a seashore while waves are rolling thereto". The idle screen indicates that the client software is waiting for the next command from a user or indication of mail arrival. However, as discussed the processing steps of the client apparatus **C** hereinabove, it should be noted that the idle screen does not mean the client software is in a wait state or has stopped processing substantially but representation to a user of an idling state as a user interface.

In the present embodiment, the client software retrieves the time value from the system clock of the client **C** when the software is started and selects an image file of a seashore corresponding to the above time value to display on the monitor as the idle screen. For example, if the client software is started in the daytime, in the twilight, or at night, a seashore in the daytime, in the twilight, or under the starlight is displayed, respectively. Moreover, it is also possible that the idle screen corresponding to the time when the client software is started is first displayed on the monitor, then display of the idle screen is controlled so that the idle screen changes in real time along with the time value successively obtained from the system clock of the client **C.**

### (a) View Saved Mail

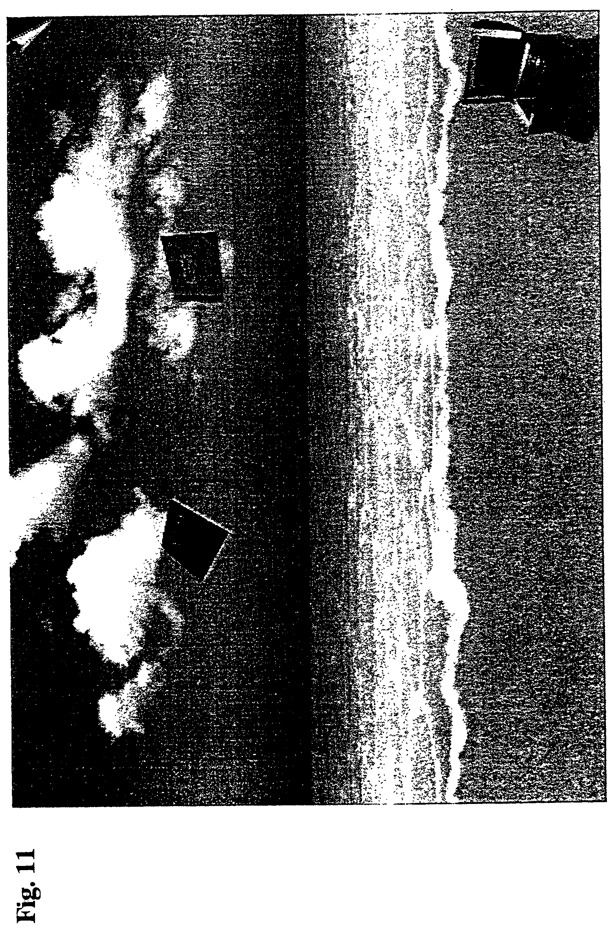

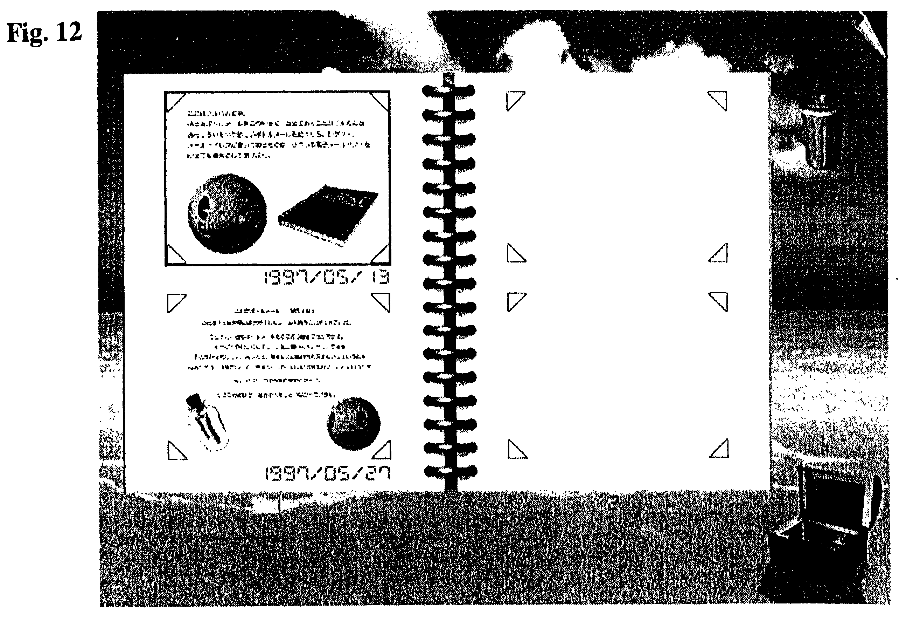

If a user wishes to view the mails saved in the album (**Fig. 6,** S606 Yes), by clicking the treasure box on the screen (S608), a "picture in which the album and the sketchbook are popping out of the treasure box" is displayed as shown in **Fig. 11** (S610). By clicking the album (S612), a "list of the saved mails" is shown as the album is opened as seen in **Fig. 12** (S614). In the present embodiment, the list of double spread includes four (4) mails saved in the album.

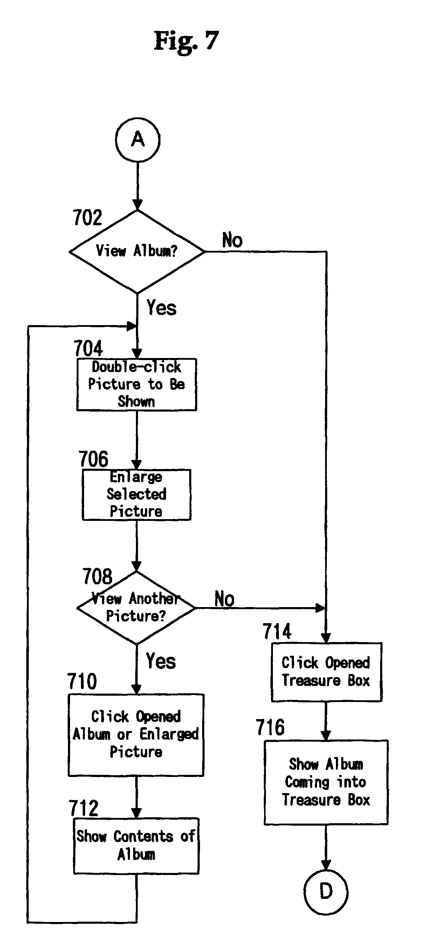

If the user does not wish to view the saved mail further (**Fig. 7,** S702 No), by clicking the opened treasure box (S714), a "picture in which the album enters the treasure box" is shown (S716) and then, the idle screen is displayed.

If the user intends to view one of the pictures saved in the album (S702 Yes), by double-clicking the picture to be shown in the list (S704), an "enlarged image of the selected mail" is displayed (S706). If the user wishes to view another picture saved in the album (S708 Yes), by clicking the enlarged picture or the opened album (S710), the screen returns to the "list of the saved mails" (S712).

### (b) Compose New Mail

If the user wishes to compose a new mail (**Fig. 6,** S606 No, S616 Yes), by clicking the treasure box on the screen (S618), a "picture in which the album and the sketchbook are popping out of the treasure box" is displayed (S620). Then, by clicking the sketchbook (S622), a "page of the sketchbook" is displayed (S624). The sketchbook also stores duplicates of outgoing mails so as to function as a logbook for registering transmission history of outgoing mails. Therefore, a duplicate of the mail already sent may be sometimes displayed when the sketchbook is opened. In case, the user is allowed to throw the displayed page into a trash can or turn the pages to open a blank page. Pages can be turned by clicking a bottom right or bottom left corner of each page.

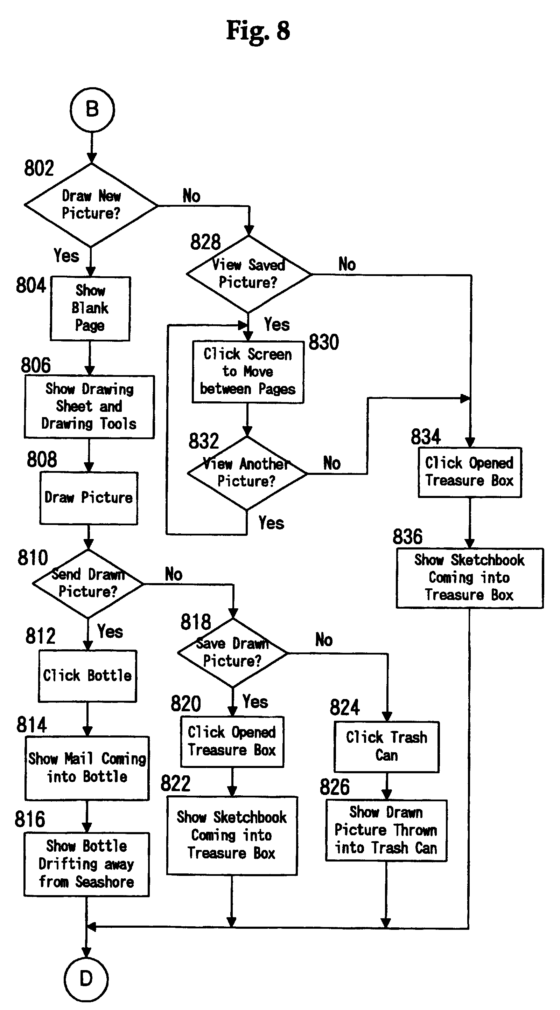

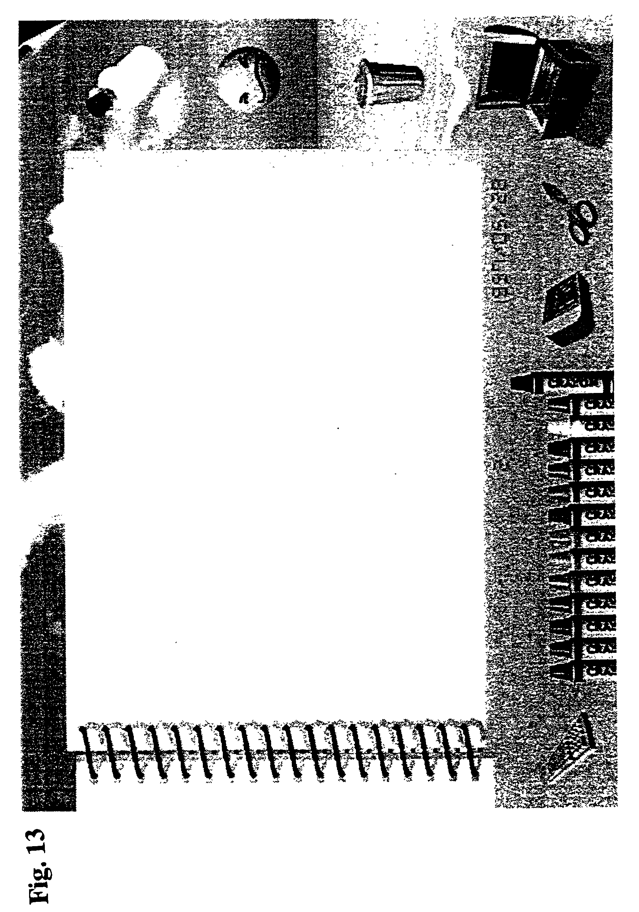

In order to draw a new picture to send a new mail (**Fig. 8,** S802 Yes), the user may open a blank page of the sketchbook as mentioned above (S804), and write any picture and characters on the page using a "drawing sheet as a blank page of the sketchbook and drawing tools" shown in **Fig. 13** (S806, S808). The drawing tools include a keyboard, crayons, an eraser, and scissors. Each drawing tool is displayed as an icon on the monitor screen. The user can select any of the tools by simply clicking the corresponding icon. The keyboard is selected to input characters via the keyboard connected to the client **C**. The crayons of various colors may be used to paint freehand lines and figures. The eraser is used to delete graphic data input on the sheet of the sketchbook. The scissors enable to move the graphic data in a selected area. As mentioned earlier, since the input data by the keyboard and the crayons are converted into a BMP format, the character strings input by the keyboard which seem to be text data apparently, consist of bitmap image data as lines and figures drawn by the crayons. Other drawing tools may be added such as a pencil, a pen, a brush, and an airbrush as employed in typical paint software programs.

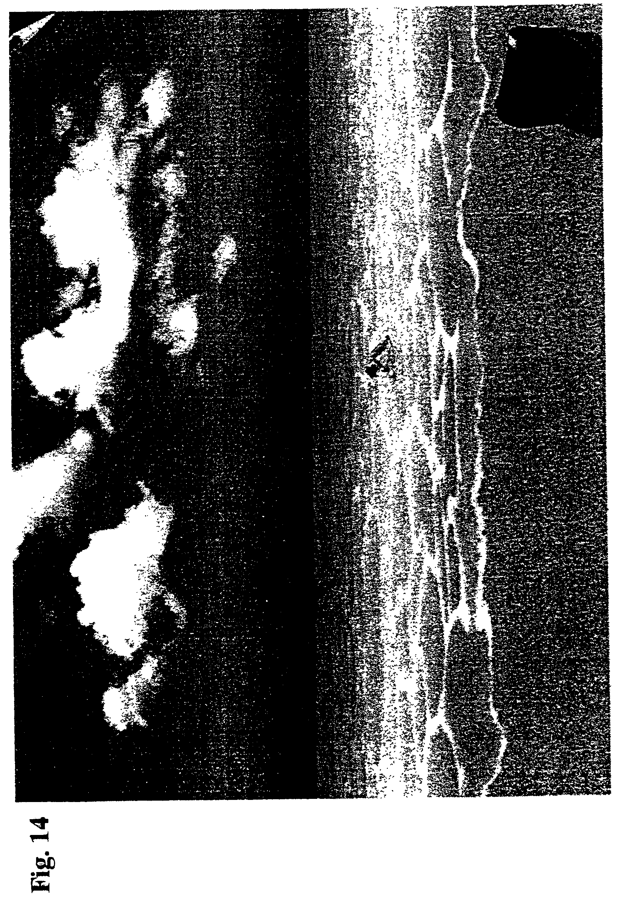

In case that thus composed mail is transmitted (S810 Yes), by clicking an empty bottle displayed on the monitor screen (S812), a "sheet of rolled letter paper being placed in the bottle" and a "scene in which the bottle containing a mail is drifting away from a seashore" as seen in **Fig. 14** are displayed (S814, S816). These images indicate to the user that the composed mail has been transmitted to the mail server **S**. However, as described above, the composed mail is not sent but stored in a predetermined storage area in the client **C** to wait for the next occurrence of transmission, if the client **C** is disconnected from the network. In the present embodiment, it is considered unnecessary to notify the user if the composed mail is actually sent in real time, and the "scene in which the bottle containing a mail is drifting away from a seashore" is displayed when the composed mail is sent to the network or joined to a queue for transmission.

If a new picture is not sent as an outgoing mail but saved in the album (S818 Yes), by clicking the opened treasure box (S820), an "image of the sketchbook coming into the treasure box" is displayed (S822), and the picture is saved in the sketchbook.

If the new picture is neither transmitted nor saved in the client **C** (S818 No), by clicking the trash can (S824), an "image of the sheet of the sketchbook screwed up and thrown into the trash can" is displayed (S826) and the page on which a picture is drawn is deleted.

In case of viewing the saved picture in the sketchbook without drawing a new picture (S828 Yes), the user can turn pages by clicking a bottom right or bottom left corner of each page of the sketchbook (S830), until the user find the page to be viewed.

If the user does not draw a new picture nor view the saved pictures (S828 No), by clicking the opened treasure box (S834), an "image of the sketchbook coming into the treasure box" is displayed on the monitor screen (S836). The monitor screen then returns to the idle screen.

### (c) View Arrived Mail Contents

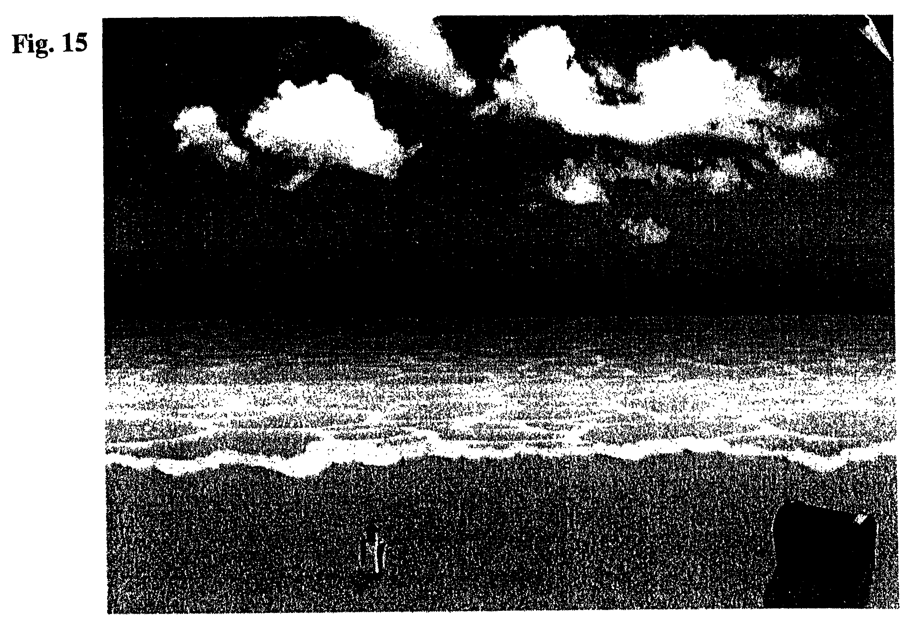

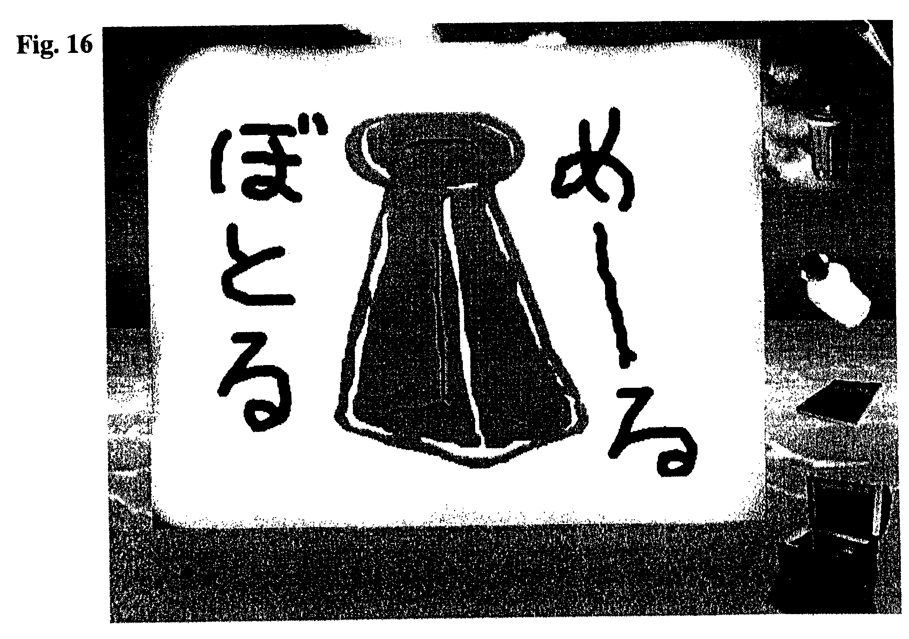

In case that the user does not view the saved mail nor compose a new mail (**Fig. 6,** S606 No, S616 No), if an arrived mail exists and indication of arrival is determined (S626 Yes), an "image of a bottle containing a mail lying on the seashore" is displayed on the monitor screen of the client **C** as shown in **Fig. 15**. If the user hopes to see the contents of the mail (S628 Yes), the user clicks the bottle on the seashore displayed on the screen (S630). Subsequently, an "image of a sheet of letter paper coming out of the bottle" (S632), then the "contents of the mail" is displayed as seen in **Fig. 16** (S634). Together with the contents of the mail, the following icons for operation by the user, an "album for storing the received mails", an "empty bottle for transferring the received mail to other clients" and a "trash can for deleting the received mail" are shown in the same screen.

The contents of the mail may be displayed in various manners according to the information recorded in the header portion of the mail. Those information typically includes a transmission path, date of transmission, a country where the server for the sender is placed, which is generally identified by the top level domain of the sender mail address, and a platform of the recipient client **C** such as Windows, MacOS, and UNIX. For example, passed time since the mail was sent may be visually expressed. Since the mail is reproduced on the monitor screen as a form of letter paper, the user may become intuitively aware of *oldness* of the received and displayed mail by demonstrating *age* of paper visually along with time elapsed since the mail was sent. In particular, the paper may become more yellowed, more smudged, more eaten as time passes since the mail was sent. For another example, the appearance of the received mail may be changed based on the country where the mail was originated. *A frozen letter* may be displayed if the received mail was originated and transmitted in February in Russia. As discussed above, the received mail can be displayed so that attribute of the mail may be known intuitively based on the information recorded in the header of the mail.

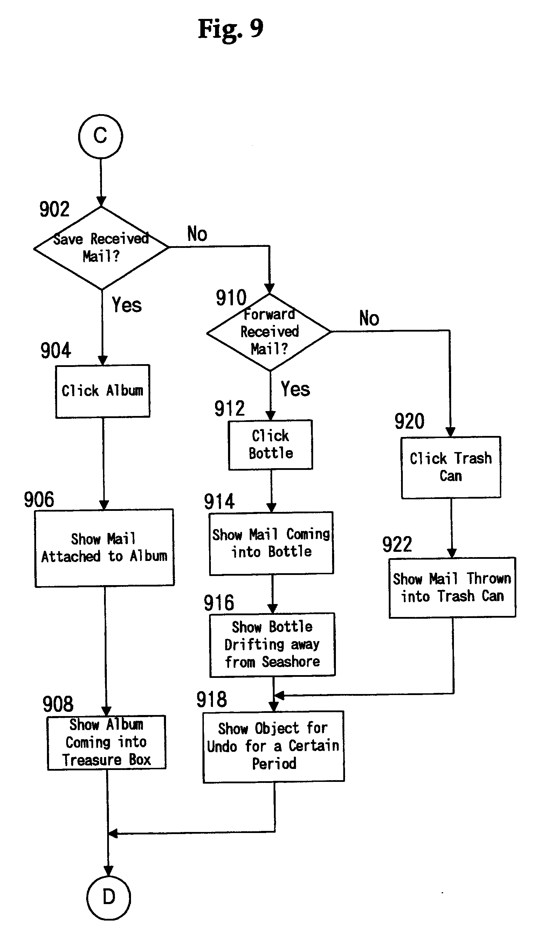

**Fig. 9** shows a flow of operation and display of the client **C** in processing the mail which was already displayed. If the mail is saved (S902 Yes), by clicking the album icon on the monitor screen (S904), an "image of the mail collected in the album" is displayed (S906). Then, an "image of the album coming into the treasure box" is shown (S908), and the screen returns to the idle screen.

On the other hand, if the mail once displayed is not saved but transferred to other clients (S910 Yes), by clicking the empty bottle on the screen (S912), an "image of the mail being placed in the bottle" and, then a "scene where the bottle containing the mail is drifting away from the seashore" is shown on the monitor screen (S914, S916). Immediately after the mail was sent, an icon for accepting the undo command to cancel the preceding mail transmission operation for a predetermined time period (S918). In the present embodiment, a mascot having a spherical head turning left and right is displayed on the screen for thirty (30) seconds. If the transfer operation is to be canceled, the screen returns to the mail contents by clicking the mascot icon.

If the user intends to delete the mail once displayed without storing or transferring it (S910 No), by clicking the trash can on the monitor screen (S920), an "image of the letter paper screwed up and thrown into the trash can" is displayed (S922). As mentioned in the transferring operation above, an icon for accepting the undo command to cancel the preceding deletion operation for a predetermined time period (S918). In the present embodiment, the mascot is displayed on the screen for thirty (30) seconds. If the deletion operation is to be canceled, the screen returns to the mail contents by clicking the mascot icon.

As described and discussed above, a bottle mail system of the present invention is configured so that anonymous electronic mails sent from the clients **C** are stored in a mailbox of the mail server in chronological order and the clients **C** receive the stored mails in the mailbox in order of logging in to the server. Therefore, very fuzzy form of communication has been established, distinguished from any of the conventional electronic communications, in that *"a user sends a message in the form of electronic mail into a network, then the message someday reaches another user on the network"*. The users of the bottle mail system are provided with motivation for sending messages freely including very private or specific matters. In one aspect, the above free and anonymous speaking on the network via the bottle mail system may heal a person having mental problems or the like.

The bottle mail system of the present invention is also useful in such a situation that the user cannot understand his/her own needs or problem completely. If the needs or problem are clear to the user, the user can try to accomplish or solve them using various resources such as a reference book and a search system. However, a human's desire, needs, and problems are often obscure to him/herself. For example, a person tends to want what he/she needs. Even in that situation, the user may receive valuable advice or suggestion from an unexpected person who picked up a message while the user repeatedly transmits his/her messages through the bottle mail system of the present invention.

Furthermore, the client apparatus employed in this bottle mail system includes intuitively understandable interfaces, for example, "draw a message easily with crayons or by a keyboard on a screen, place it into a bottle and throw it away into an ocean" and "when the bottle is lying on a seashore, read a massage placed in the bottle". Such a system is easy for children and elderly people to understand, so that media such as an electronic mail will become more popular and be used more practically among us.

### Industrial Applicability

As is discussed in detail with reference to one embodiment of the present invention, the client and server apparatuses for transmitting and receiving electronic mails bearing no specific recipient, and the electronic mail system including them have the following effects.
(1) The text data and/or graphic data input by a user are transmitted to a mailbox on a communication network as an object attaching the input message bearing no specific destination. Thus, it becomes possible for a user to easily send an electronic mail with no specific recipient. Specifically, the input text and/or graphic data are converted into a predetermined data format. This data conversion into a predetermined data format is made so as to avoid possible errors in displaying text data due to differences in a platform, a language and a font set between respective computers. Accordingly, it becomes possible for a recipient of the electronic mail to receive information exactly the same as the sender has made.
(2) In the client apparatus, a new electronic mail is created based on the above converted image data. The mail contains no information regarding a sender unless the sender information is included in the converted image data by the sender intentionally. That is, a sender can transmit anonymous electronic mails as he/she wishes.
(3) The client apparatus receives electronic mail files transferred from a predetermined mailbox on a communication network. A user can easily confirm arrival of an electronic mail by displaying receipt of the transferred electronic mail files as an object containing the above message. Furthermore, the client apparatus stores the received electronic mail files transferred from a predetermined mailbox of the above electronic mail server apparatus. The received electronic mail files are displayed according to a determination as to whether or not the client apparatus indicates arrival of a mail to the user. This enables electronic mails to be transmitted to the client apparatus at irregular intervals irrespective that the client apparatus is connected or disconnected to a communication network.
(4) The electronic mail files transmitted from respective users' client apparatus are stored in chronological order in a predetermined mailbox of the server apparatus. The electronic mail files are transferred to a user when the user logs in to. The transferred mail files are selected from among the mail files stored in the mailbox. This enables to establish such an unpredictable communication as to when and by whom the mail file transmitted from a user is received.
(5) The client apparatus is represented visually as an image in the virtual space and each electronic mail file is represented as an object containing a message. A user creates and transmits a message as an electronic mail by such a simple interface that a user inputs text and/or graphic data on a predetermined drawing area defined on a monitor with a drawing tool prepared thereon and throwing an object attaching the created message into the virtual space. Therefore, it will be possible to provide a means of electronic communication which is friendly to children and elderly people.

## Claims

1. An electronic mail client apparatus for transmitting and receiving electronic mails specifying no recipient and sender therein, comprising:
means for converting text data and/or graphic data input by a user into an image data of a predetermined data format;
means for composing an electronic mail file containing said converted image data, said mail file being automatically provided with a mail address of a predetermined mailbox on a communication network as a destination, said mail file bearing no information specifying a sender unless the sender information is included in the converted image data by a sender intentionally;
means for transmitting the electronic mail file to the mailbox on the communication network if communication with the communication network is established when the user requests transmission of the mail file, together with such mail files being saved in the client apparatus that have been previously composed but not transmitted yet;
means for receiving to store one or more electronic mail files transferred from the predetermined mailbox and indicating receipt of the transferred electronic mail files based on decision according to a predetermined rule as to whether the receipt should be indicated or not; and
means for displaying said image data contained in the received electronic mails to the user of the client apparatus that receives said electronic mails.

2. An electronic mail client apparatus claimed in claim 1, wherein said received electronic mail files are transferred to the other client apparatuses through the communication network when the received mail files are neither saved nor deleted.

3. An electronic mail client apparatus claimed in claim 1, wherein determination is made at such time intervals for indicating said receipt of the mail files, that the time interval is calculated according to a predetermined procedure and a probability of occurrence for each of events as to whether indicating or not the receipt of the mail file is set at a predetermined value.

4. An electronic mail client apparatus claimed in claim 1, wherein appearance of the displayed mail file is varied dependent on predetermined information provided to the received mail files according to a communication protocol applied to transmission of the mail files.

5. An electronic mail client apparatus claimed in claim 4, wherein the transmission time data contained in the received electronic mail file is compared with the present time to display said image data in the electronic mail file in the manner such that the image data is displayed on a sheet presented with visual expression of time passage along with the time lapsed since the transmission time until the present time.

6. An electronic mail server apparatus for transmitting and receiving electronic mail specifying no recipient and sender therein, comprising:
means for storing electronic mail files sequentially in a predetermined mailbox, which are transferred from users;
means for transmitting the electronic mail files to a user, which are selected from among the mail files stored in said mailbox when the user logs in to, and deleting the mail files already transmitted to the user remaining in the mailbox; and
means for processing a plurality of transmitting and receiving procedures in parallel with a plurality of users, so that the plurality of users are allowed to log in to.

7. An electronic mail server apparatus claimed in claim 6, wherein message files from a system are stored in said mailbox and transmitted with the electronic mail files to the user who logs in to.

8. An electronic mail server apparatus claimed in claim 7, wherein data containing predetermined conditions under which the message is to be displayed is attached to each said message file.

9. An electronic mail server apparatus claimed in claim 6, wherein one electronic mail file randomly selected from among the stored mail files in the mailbox, is transmitted to the user who logs in to.

10. An electronic mail server apparatus claimed in claim 6, wherein one or more electronic mail files are selected from among the mail files stored in the mailbox and transmitted to a user according to a predetermined rule corresponding to the number of the mail files stared in the mailbox.

11. An electronic mail system for transmitting and receiving electronic mail files specifying no recipient and sender, wherein electronic mail client apparatuses as claimed in claim 1 and an electronic mail server apparatus as claimed in claim 6 are connected through a communication network, an address of the mailbox of said electronic mail server apparatus is designated as a destination address of electronic mail files from said electronic mail client apparatuses.

12. An electronic mail client apparatus comprising:
means for representing received and transferred electronic mail files as an object containing a message drifting in a virtual space;
means for composing an electronic mail file containing a message data, which is automatically provided with an address of a predetermined mailbox on the communication network to which the client apparatus is connected, said message data being input on a sheet displayed on a monitor of the client apparatus with a drawing tool presented on the monitor;
means for transmitting said electronic mail file to the predetermined mailbox on the communication network in response to the user's request, said transmission procedure being represented visually as an image of forwarding said object with a message in the virtual space from one place therein;
means for receiving said electronic mail file transferred from the mailbox and displaying the receipt of the mail file, said receipt of the mail file being represented as an image that the object with a message has reached another place in the virtual space; and
means for displaying the message data in said received electronic mail file to the user of the client apparatus which has received the mail file.

13. An electronic mail client apparatus claimed in claim 12, wherein said message data input by the user is automatically converted into an image data of a predetermined data format, said message data including text data and/or graphic data.

14. An electronic mail client apparatus claimed in claim 12, wherein said electronic mail file does not include an information for identifying a sender.

15. An electronic mail client apparatus claimed in claim 12, wherein said composed mail file is stored in a predetermined area in the client apparatus in case that the client apparatus is not connected with the communication network when transmission request is made by the user, said stored mail file being transmitted with a new composed electronic mail file to the mailbox in case that the client apparatus is connected with the communication network when transmission of the new composed mail file is requested by the user.

16. An electronic mail client apparatus claimed in claim 12, wherein receipt of the transferred or received electronic mail files from said mailbox are displayed based on results from a predetermined decision as to whether the receipt of the mail file should be indicated or not.

17. An electronic mail client apparatus claimed in claim 16, wherein determination is made at such time intervals for indicating said receipt of the mail files, that the time interval is calculated according to a predetermined procedure and a probability of occurrence for each of events as to whether indicating or not the receipt of the mail file is set at a predetermined value.

18. An electronic mail client apparatus claimed in claim 12, wherein said displayed visual image of the virtual space is changed according to the time when the client apparatus is started or the time lapsed since the client apparatus is started.

19. An electronic mail client apparatus claimed in claim 12, wherein the electronic mail files, which have been received but neither saved nor deleted in the client apparatus, are transferred to another client apparatus through the communication network.

20. An electronic mail client apparatus claimed in claim 12, appearance of the displayed mail file is varied dependent on predetermined information provided to the received mail files according to a communication protocol applied to transmission of the mail files.

21. An electronic mail client apparatus claimed in claim 20, wherein the transmission time data contained in the received electronic mail file is compared with the present time to display said image data in the electronic mail file in the manner such that the image data is displayed on a sheet presented with visual expression of time passage along with the time lapsed since the transmission time until the present time.
